# EUROPEAN PATENT APPLICATION

(11) **EP 4 797 135 A1**
(43) Date of publication of application: **26.08.2026**
(21) Application number: 24887542.9
(22) Date of filing: 15.08.2024
(51) Int. Cl.: G06F 21/62

(54) **DATA PROCESSING METHOD AND APPARATUS**

(30) Priority: 07.11.2023 CN 202311486217
(71) Applicant: HUAWEI TECHNOLOGIES CO., LTD., Shenzhen 518129 (CN)
(72) Inventor: WANG, Fei, Shenzhen, Guangdong 518129 (CN); PENG, Chenghui, Shenzhen, Guangdong 518129 (CN); LI, Fangfang, Shenzhen, Guangdong 518129 (CN); WAN, Shuo, Shenzhen, Guangdong 518129 (CN); LU, Jiaxun, Shenzhen, Guangdong 518129 (CN)
(74) Representative: Isarpatent
(86) International application number: PCT/CN2024/112529
(87) International publication number: WO 2025/097922

(57) **Abstract**

This application provides a data processing method and apparatus, pertaining to the communication field. It enables a second network function to provide personalized services for users without collecting their private data. A first network function may generate a first personalized model for a first user. The first model is obtained through training based on a historical original question and personalized information of the first user. By inputting an original question (a first message) of the first user into the first model, a personalized question (a second message) of the first user can be obtained. The second message is then input into the second network function to obtain a reply result (a fourth message) corresponding to the second message.

## Description

This application claims priority to Chinese Patent Application No. 202311486217.3, filed with the China National Intellectual Property Administration on November 7, 2023 and entitled "DATA PROCESSING METHOD AND APPARATUS", which is incorporated herein by reference in its entirety.

### TECHNICAL FIELD

This application relates to the field of communication technologies, and specifically, to a data processing method and apparatus.

### BACKGROUND

With the development of artificial intelligence technologies, neural network models have further evolved. These models may be used in fields such as intelligent customer service, intelligent recommendation, and autonomous driving. For example, intelligent chatbots can accurately recognize and understand speech and text information of users, thereby providing more intelligent services. However, to deliver personalized services, these intelligent chatbots often retain historical chat records and private information of users. This may lead to user information leakage, raising security concerns. In addition, each intelligent chatterbot needs to retain the information, and such redundant backup is a waste of resources and further increases the risk of user information leakage.

### SUMMARY

This application provides a data processing method and apparatus that enables a second network function to deliver personalized services for users without collecting their private data.

The second network function does not perform storage and processing of personalized information of the user and does not store or leak private information of the user, and the user can still obtain a personalized reply result.

To achieve the foregoing objectives, embodiments of this application provide the following technical solutions.

According to a first aspect, this application provides a data processing method, applied to a first network function, where the first network function is for obtaining a personalized question based on a first model, and the method includes: receiving a first message, where the first message includes an original question; and sending a second message, where the second message is determined based on the first model and the first message, the first model is obtained through training based on a current and/or a historical original question and personalized information of a first user, the second message indicates a personalized question corresponding to the first message, the second message is used by a second network function to obtain a reply result, and the second network function is for inferring the second message based on an artificial intelligence AI inference model.

In this way, the second network function does not perform storage and processing of the personalized information of the user and does not store or leak private information of the user, and the user can still obtain a personalized reply result.

In a possible implementation, the first network function is located in a core network of a mobile network.

The core network of the mobile network is more secure than a third-party network. In this way, security of the first network function is ensured, thereby preventing leakage of the private information of the user.

In a possible implementation, sending the second message includes: sending the second message to the second network function, or sending the second message to a terminal device.

Optionally, the second message may be sent to the second network function or the terminal device. The implementation is applied to a plurality of scenarios and has strong applicability, thereby improving user experience.

In a possible implementation, before receiving the first message, the method further includes: receiving a fifth message, where the fifth message includes a first user identifier, and the fifth message is for requesting to establish the first model; and establishing the first model based on the fifth message.

In this way, the first model corresponding to the first user can be established.

In a possible implementation, establishing the first model based on the fifth message includes: sending a first request message, where the first request message is for requesting the personalized information of the first user; receiving a first response message, where the first response message includes the personalized information of the first user, and determining the first model based on the first response message, the historical original question of the first user, and a second model, where the second model is determined based on general information; and generating a first model identifier of the first model, where the first model corresponds to the first model identifier.

In this way, a personalized model is used for a specific user, and the model better conforms to a use habit of the user, thereby obtaining a more accurate reply result.

In a possible implementation, the method further includes: generating a mapping relationship between the first model identifier and the first user identifier. In this way, efficiency of determining the corresponding first model based on the first message can be improved, thereby improving user experience.

In a possible implementation, after receiving the first message, the method further includes: sending a sixth message to a unified data management function, where the sixth message is for querying for the first user identifier corresponding to the first message; receiving a seventh message from the unified data management function, where the seventh message includes the first user identifier corresponding to the first message; and determining the first model identifier based on the first user identifier and the mapping relationship between the first model identifier and the first user identifier. In this way, the first model corresponding to the first message can be quickly determined, so that the second message is subsequently generated by using the first model.

In a possible implementation, the method further includes: sending the first model identifier to a unified data management function.

In a possible implementation, after receiving the first message, the method further includes: sending an eighth message to the unified data management function, where the eighth message is for querying for the first model identifier corresponding to the first message; and receiving a ninth message from the unified data management function, where the ninth message includes the first model identifier corresponding to the first message. In this way, the unified data management function can generate the mapping relationship between the first model identifier and the first user identifier, and the first network function only generates and uses the first model, thereby improving function specificity of the first network function.

In a possible implementation, after sending the second message, the method further includes: receiving a feedback message from the terminal device, where the feedback message includes user evaluation information; and updating the first model based on the feedback message.

In this way, the first network function can update and refine the first model by using the user evaluation information, thereby improving inference accuracy and a personalization degree of the first model.

According to a second aspect, this application provides a data processing method, applied to a terminal device and including: sending a first message, where the first message includes an original question; receiving a second message, where the second message is determined based on a first model and the first message, the first model is obtained through training based on a current and/or a historical original question and personalized information of a first user, the second message indicates a personalized question corresponding to the first message, the second message is used by a second network function to obtain a reply result, and the second network function is for inferring the second message based on an artificial intelligence AI inference model; sending a third message to the second network function, where the third message is obtained based on the second message; and receiving a fourth message from the second network function, where the fourth message includes a reply result of the third message.

In a possible implementation, sending the first message includes: sending the first message to the second network function, or sending the first message to a first network function.

In a possible implementation, before sending the first message, the method further includes: sending a service subscription message to a unified data management function, where the service subscription message indicates the first network function to establish the first model.

In a possible implementation, the method further includes: receiving a first request message, where the first request message is for requesting the personalized information of the first user; sending a first response message, where the first response message includes the personalized information of the first user; and determining the first model based on the first response message, the historical original question of the first user, and a second model, where the second model is determined based on general information, and the first model corresponds to a first model identifier.

In a possible implementation, the method further includes: sending a feedback message to the first network function, where the feedback message includes user evaluation information.

According to a third aspect, this application provides a data processing method, applied to a unified data management function and including: receiving a service subscription message from a terminal device, where the service subscription message indicates a first network function to establish a first model; and sending a fifth message to the first network function, where the fifth message includes a first user identifier, and the fifth message is for requesting to establish the first model.

In this way, after a first user subscribes to the unified data management function by using the terminal device, a personalized first model of the first user can be generated.

In a possible implementation, the method further includes: receiving a first model identifier from the first network function; and generating a mapping relationship between the first model identifier and the first user identifier.

In a possible implementation, the method further includes: receiving a first model identifier confirmation message from the first network function, where the first model identifier confirmation message is for querying for a first model identifier corresponding to a first message; and sending a first model identifier response message, where the first model identifier response message includes the first model identifier corresponding to the first message.

According to a fourth aspect, this application provides a data processing apparatus, used in a first network function and including: a receiving module, configured to receive a first message, where the first message includes an original question; and a sending module, configured to receive a second message, where the second message is determined based on a first model and the first message, the first model is obtained through training based on a current and/or a historical original question and personalized information of a first user, the second message indicates a personalized question corresponding to the first message, the second message is used by a second network function to obtain a reply result based on the second message, and the second network function is for inferring the second message based on an artificial intelligence AI inference model.

According to a fifth aspect, this application provides a data processing apparatus, used in a terminal device and including: a sending module, configured to send a first message, where the first message includes an original question; and a receiving module, configured to receive a second message, where the second message is determined based on a first model and the first message, the first model is obtained through training based on a current and/or a historical original question and personalized information of a first user, the second message indicates a personalized question corresponding to the first message, the second message is used by a second network function to obtain a reply result based on the second message, and the second network function is for inferring the second message based on an artificial intelligence AI inference model. The sending module is further configured to send a third message to the second network function, where the third message is obtained based on the second message. The receiving module is further configured to receive a fourth message from the second network function, where the fourth message includes a reply result of the third message.

According to a sixth aspect, this application provides a data processing apparatus, used in a unified data management function and including: a receiving module, configured to receive a service subscription message from a terminal device, where the service subscription message indicates a first network function to establish a first model; and a sending module, configured to send a fifth message to the first network function, where the fifth message includes a first user identifier, and the fifth message is for requesting to establish the first model.

According to a seventh aspect, this application provides a communication apparatus, including a processor, where the processor is configured to implement, by using a logic circuit or by executing code instructions, the method according to any one of the first aspect, the method according to any one of the second aspect, or the method according to any one of the third aspect.

According to an eighth aspect, this application provides an electronic device, including a processor and a memory, where the memory is coupled to the processor, the memory is configured to store computer program code, and the computer program code includes computer instructions. When the processor reads the computer instructions from the memory, the electronic device is enabled to perform the method according to the first aspect.

According to a ninth aspect, this application provides a computer-readable storage medium, where the computer-readable storage medium stores instructions. When the instructions are run on an electronic device, the electronic device is enabled to perform the method according to the first aspect, the method according to any one of the second aspect, or the method according to any one of the third aspect.

According to a tenth aspect, this application provides a chip system, including at least one processor and at least one interface circuit, where the at least one interface circuit is configured to perform a transceiver function, and send instructions to the at least one processor. When the at least one processor executes the instructions, the at least one processor performs the method according to any one of the first aspect, the method according to any one of the second aspect, or the method according to any one of the third aspect.

According to an eleventh aspect, this application further provides a computer program product, including instructions. When the instructions are run on a computer, the computer is enabled to perform the method according to any one of the first aspect, the method according to any one of the second aspect, or the method according to any one of the third aspect.

For technical effects corresponding to any one of the second aspect to the eleventh aspect and the implementations of the second aspect to the eleventh aspect, refer to technical effects corresponding to any one of the first aspect and the implementations of the first aspect. Details are not described herein.

### BRIEF DESCRIPTION OF DRAWINGS

FIG. 1 is a diagram of a communication system according to an embodiment of this application;
FIG. 2 is a diagram of a data processing system according to an embodiment of this application;
FIG. 3 is a flowchart of a data processing method according to an embodiment of this application;
FIG. 4 is a flowchart of another data processing method according to an embodiment of this application;
FIG. 5 is a flowchart of a method for generating a first model according to an embodiment of this application;
FIG. 6 is a flowchart of another data processing method according to an embodiment of this application;
FIG. 7 is a flowchart of another data processing method according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

Terms such as "include", "have", and any variants thereof mentioned in descriptions of embodiments of this application are intended to cover a non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device.

It should be noted that, in embodiments of this application, words such as "example" or "for example" are used for representing giving an example, an illustration, or a description. Any embodiment or design scheme described as an "example" or "for example" in embodiments of this application should not be explained as being more preferred or having more advantages than another embodiment or design scheme. To be precise, use of the words such as "example" or "for example" is intended to present a related concept in a specific manner.

In the descriptions of embodiments of this application, unless otherwise specified, "a plurality of" means two or more. "And/or" in this specification describes only an association relationship between associated objects and indicates that three relationships may exist. For example, A and/or B may indicate the following three cases: Only A exists, both A and B exist, and only B exists.

In embodiments of this application, "at least one" may alternatively be described as one or more, and "more" may be two, three, four, or more. This is not limited in this application.

In embodiments of this application, for a technical feature, "first", "second", "third", "A", "B", "C", "D", and the like are used for distinguishing between technical features therein. There is no chronological order or no size order between the technical features described by "first", "second", "third", "A", "B", "C", and "D".

In a nascent stage of artificial intelligence technologies, emergence of neural network models represented by convolutional neural networks (convolutional neural networks, CNNs) enables in-depth development of research and application in fields such as natural language generation and computer vision. Later, with emergence of new neural network models such as a generative adversarial network (generative adversarial network, GAN) and a transformer, algorithm structures and training technologies of large models are further developed and refined, and scales of the models are gradually increased. Finally, models at a level of hundreds of billions of parameters, such as a bidirectional encoder representations from transformers (bidirectional encoder representations from transformers, BERT) model and a generative pre-trained transformer (generative pre-trained transformer, GPT) model, emerge, and a capability of the large models achieves unprecedented improvement. Application scenarios of the large models are also wider, including natural language processing, computer vision, and speech recognition. For example, intelligent chatbots can accurately recognize and understand speech and text information of users, thereby providing more intelligent services, and allowing more people to enjoy convenience brought by the intelligent services.

When providing a chat service for the user, the intelligent chatterbot can provide a more personalized service based on a previous chat record. A historical record is used as an input, so that more corpus information can be provided for the large model, thereby providing a more accurate answer to a question of the user.

However, if a chat window is restarted when the intelligent chatterbot is used, historical information from previous chat is invalid. If the intelligent chatterbot is allowed to retain a historical record of a user for a long time, there is a risk of personal privacy leakage. The intelligent chatterbot may collect account information of the user, all dialog-related content, and various private information (for example, small text files (Cookies), logs, and device information) on a web page during interaction, where the information may be shared with suppliers, service providers, and affiliates.

In addition, when an OTT (over the top) vendor provides a large-model service for the user, if the personalized service is to be provided for the user, private information of the user needs to be collected, causing a risk of information leakage.

To resolve the foregoing problem, this application provides a data processing method. In the method, a first network function may generate a personalized first model of a first user. The first model is obtained through training based on a current and/or a historical original question of and personalized information of the first user. The original question (a first message) of the first user is input into the first model to obtain a personalized question (a second message) of the first user. The second message is input into a second network function to obtain a reply result of the second message. The first network function is a logical function, and is located in a core network of a mobile network, to ensure that the second network function provides a personalized service for the user without collecting private data of the user.

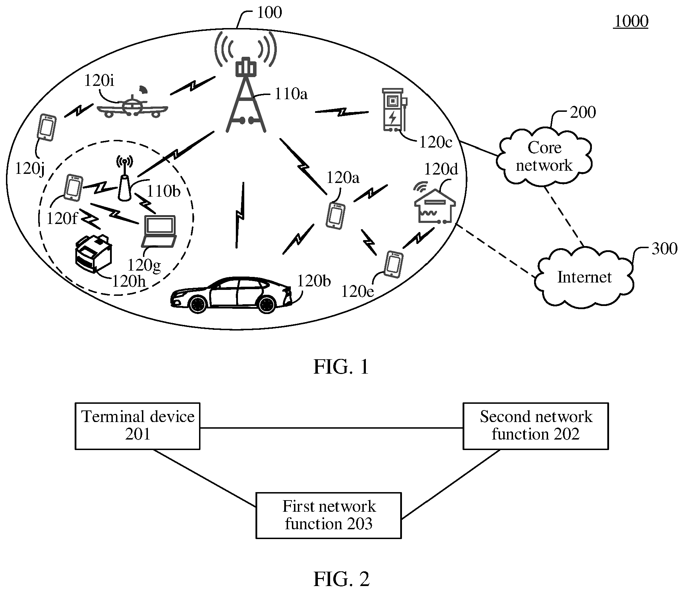

FIG. 1 is a diagram of an architecture of a communication system 1000 to which an embodiment of this application is applied. As shown in FIG. 1, the communication system includes a radio access network (radio access network, RAN) 100. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. Mutual connections between terminals and between RAN nodes may be implemented in a wired or wireless manner. The communication system 1000 may further include a core network 200. The RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The communication system 1000 may further include an internet 300.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP), or may be a Wi-Fi system. The RAN 100 may further include the foregoing two or more different radio access systems. The RAN 100 may alternatively be an open RAN (open RAN, O-RAN).

The RAN 100 may alternatively be a device in a non-3GPP network. The non-3GPP network includes but is not limited to a wireless local area network (wireless local area network, WLAN), for example, Wi-Fi. A non-3GPP device may include a non-3GPP access point (access point, AP). The access point includes but is not limited to a router, an optical modem, and the like. A form of the RAN 100 is not limited in embodiments of this application.

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, or an access node in a Wi-Fi system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement some functions of the base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further divided into two types of RAN nodes of a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which a base station is used as the RAN node.

The terminal is a device having a wireless transceiver function, and may send a signal to a base station or receive a signal from the base station. The terminal may also be referred to as a terminal device, user equipment (user equipment, UE), a mobile station, a mobile terminal, or the like. The terminal may be widely used in various scenarios, such as device-to-device (device-to-device, D2D), vehicle-to-everything (vehicle-to-everything, V2X) communication, machine-type communication (machine-type communication, MTC), the internet of things (internet of things, IoT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or mobile. The base station and the terminal may be deployed on land, including an indoor or outdoor device, a handheld device, or a vehicle-mounted device, may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 via 120i, the terminal 120i is a base station. However, for a base station 110a, 120i is a terminal. In other words, 110a and 120i communicate with each other according to a radio air interface protocol. Certainly, 110a and 120i may alternatively communicate with each other according to an interface protocol between base stations. In this case, for 110a, 120i is also a base station. Therefore, both the base station and the terminal may be collectively referred to as communication apparatuses. 110a and 110b each in FIG. 1 may be referred to as a communication apparatus having a function of the base station, and 120a to 120j each in FIG. 1 may be referred to as a communication apparatus having a function of the terminal.

In embodiments of this application, the function of the base station may alternatively be performed by a module (for example, a chip) in the base station, or may be performed by a control subsystem including the function of the base station. Herein, the control subsystem including the function of the base station may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

FIG. 2 is a diagram of a structure of a system according to an embodiment of this application. The system includes a terminal device 201, a second network function 202, and a first network function 203.

Optionally, the terminal device 201 is configured to send a first message to the second network function 202 or the first network function 203. The terminal device 201 is further configured to receive a second message from the first network function 203. The terminal device 201 is further configured to send a third message to the second network function 202. The terminal device 201 is further configured to receive a fourth message from the second network function 202.

The second network function 202 is for receiving the second message from the terminal device 201 or the first network function 203. The second network function 202 is further for receiving the third message from the terminal device 201. The second network function 202 is further for receiving the first message from the terminal device 201. The second network function 202 is further for sending the first message to the first network function 203. The second network function 202 is further for sending the fourth message to the terminal device 201.

The first network function 203 is for receiving the first message from the terminal device 201 or the first network function 203. The first network function 203 is further for sending the second message to the terminal device 201 or the second network function 202.

Optionally, the terminal device 201, the second network function 202, and the first network function 203 may be connected to each other via a wired device or a wireless device. A wireless network may be a radio access network.

The following describes in detail a technical solution provided in this embodiment of this application.

In an embodiment, a user may input the first message, that is, an original question, on the terminal device. The terminal device sends the first message to the first network function. The first network function may obtain the second message, that is, a personalized question, based on the first message, and return the second message to the terminal device. Then, the terminal device may send the second message to the second network function. The second network function performs inference on the second message to obtain a reply result, and returns the reply result to the terminal device, so that the user views the reply result corresponding to the first message.

Optionally, after receiving the second message, the terminal device may further process the second message to obtain the third message, and send the third message to the second network function. The second network function performs inference on the third message to obtain a reply result, and returns the reply result to the terminal device, so that the user views the reply result corresponding to the first message.

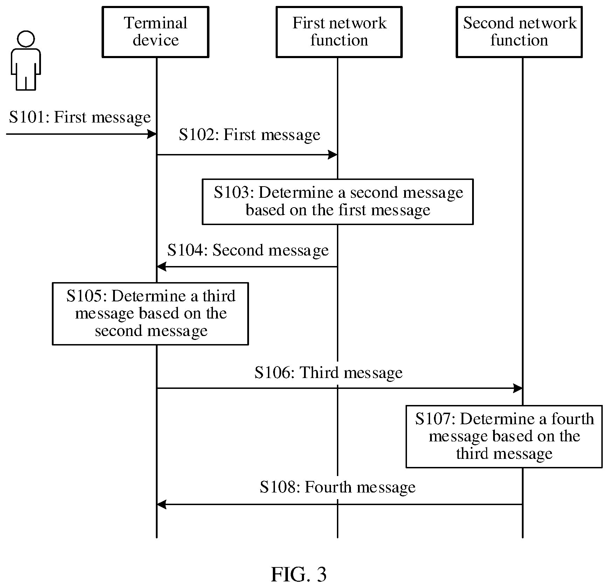

Optionally, in this embodiment of this application, an example in which a terminal device sends a first message to a first network function is used for description. FIG. 3 is a flowchart of a data processing method according to an embodiment of this application. The method includes step S101 to step S108.

S101: The terminal device obtains the first message. The first message is for obtaining a personalized question.

Optionally, a first user inputs the first message on the terminal device. Correspondingly, the terminal device receives the first message input by the first user. For example, the first user may input an original question, that is, the first message, on the terminal device. For example, the first message may be "Any recommendations for lunch?" The first message may also be another question input by the first user. This is not specifically limited in this embodiment of this application.

Optionally, the terminal device stores a plurality of original questions. The terminal device selects one of the original questions and determines the selected original question as the first message.

Optionally, the first message includes a terminal identifier.

S102: The terminal device sends the first message to the first network function. Correspondingly, the first network function receives the first message from the terminal device.

Optionally, the first network function is for obtaining the personalized question based on a first model.

Specifically, the first network function is for generating the first model, and the first model is used for providing a personalized service.

Optionally, the first network function is further for generating a first model identifier corresponding to the first model.

The first network function is a logical function, and is located in a core network of a mobile network and may be co-deployed with another network function of the core network. The mobile network may be a public land mobile network (public land mobile network, PLMN). The terminal device may send the first message to the first network function via an access network device.

Optionally, the first model is obtained by the first network function through training based on a current and/or a historical original question and personalized information of the first user, and can provide the personalized service to obtain a personalized second message. The first model may be a neural network model or an expert knowledge base (for example, a vector database like a knowledge graph). This is not specifically limited in this embodiment of this application.

For example, the first network function may be a personalized bridging logic function (bridging logic function, BLF). The terminal device may send the first message to the BLF via an access network device. The first model may be a personalized bridging model (personalized bridging model, PBM).

In an embodiment, the first user may first subscribe to a model service with the mobile network, and then the mobile network generates a personalized first model of the first user. The first model corresponds to the first model identifier. The first network function may generate a mapping relationship between the first model identifier and a first user identifier. When the first user sends the first message to the first network function via the terminal device, the first network function may determine, based on the terminal identifier carried in the first message, the first user identifier corresponding to the first message, and determine the first model identifier based on the mapping relationship between the first model identifier and the first user identifier, so as to determine the first model corresponding to the first user.

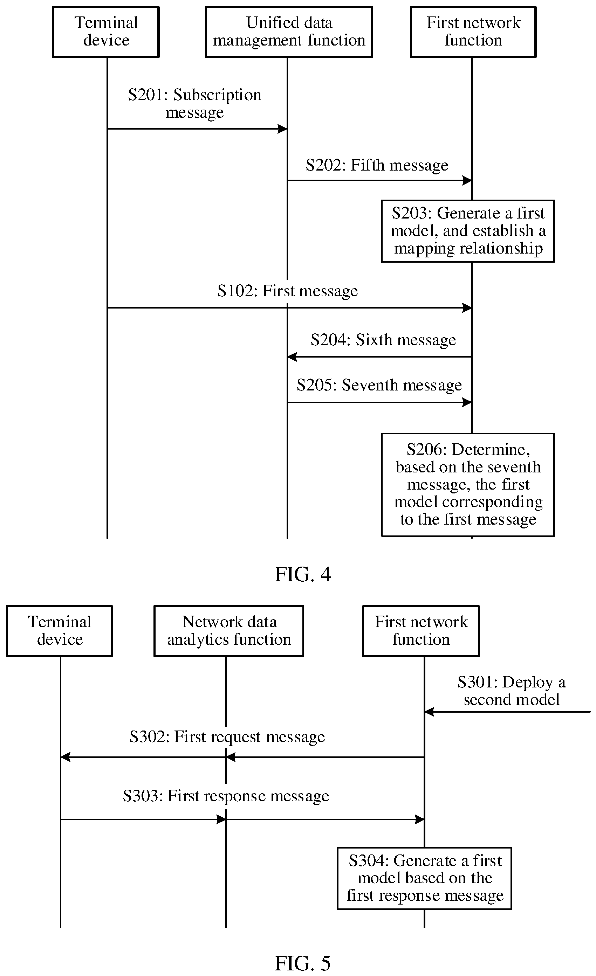

Optionally, the process in which the first network function generates the first model corresponding to the first user may specifically be step S201 to step S206 shown in FIG. 4.

S201: The terminal device sends a subscription message of the first user to a unified data management function. Correspondingly, the unified data management function receives the subscription message from the terminal device.

Optionally, the first user may send the subscription message to a unified data management (unified data management, UDM) function of the mobile network via the terminal device. Optionally, the subscription message of the first user includes the first user identifier. The unified data management function may subscribe with the first user based on the subscription message. Then, the first network function may generate the personalized first model of the first user.

Optionally, subscription information of a user may be stored in the unified data management function of the mobile network, indicating that the user has subscribed to the model service with the mobile network.

S202: The unified data management function sends a fifth message to the first network function. Correspondingly, the first network function receives the fifth message from the unified data management function. The fifth message is for requesting to establish the first model.

Optionally, after receiving the subscription message from the terminal device, the unified data management function may send the fifth message to the first network function to instruct the first network function to establish the personalized first model of the first user. The fifth message includes the first user identifier.

Optionally, the first network function may establish the first model of the first user in a manner shown in S203, or may establish the first model in another manner. This is not specifically limited in this embodiment of this application.

S203: The first network function generates the first model and establishes the mapping relationship.

Optionally, the first network function may obtain the first model through training based on the personalized information of the first user. The first network function may obtain the personalized information of the first user in the terminal device through a network data analytics function (network data analytics function, NWDAF).

Optionally, the specific procedure in which the first network function generates the first model of the user may be step S301 to step S304 shown in FIG. 5.

S301: The first network function deploys a second model.

Optionally, after receiving the fifth message from the unified data management function, the first network function deploys the second model, and then trains the second model to obtain the first model. The second model is a model determined based on general information.

Optionally, the general information may be information that is applicable to a wide range and is universally applicable, and does not involve specific information of an individual or a specific situation. For example, the general information may include information such as natural sciences, historical events, geographical knowledge, mathematical concepts, health knowledge, social common sense, or cultural traditions.

The second model is a generative model that generates richer association information based on an initial input, but does not involve personalized information of a user.

For example, when the first message "Any recommendations for lunch?" is input into the second model, the second model may recommend lunch based on the general information, for example, recommending "hot pot, barbecue, or grilled fish".

S302: The first network function sends a first request message to the terminal device. Correspondingly, the terminal device receives the first request message from the first network function.

Optionally, the first request message is for requesting the personalized information of the first user.

For example, the first request message may be ueld event=PBM Generation.

Specifically, the first network function may first send the first request message to the network data analytics function. After receiving the first request message from the first network function, the network data analytics function sends the first request message to the terminal device. The network data analytics function may collect the personalized information of the first user in the terminal device through a data collection and analysis framework (data collection and analysis framework, DCAF).

S303: The terminal device sends a first response message to the first network function. Correspondingly, the first network function receives the first response message from the terminal device.

Specifically, the terminal device may send the first response message to the network data analytics function, and the network data analytics function sends the first response message from the terminal device to the first network function.

Optionally, the first response message includes the personalized information of the first user. The personalized information of the first user may include the first user identifier; basic identity information, such as gender or age; geographical location information, for example, the location of the first user; interest information, such as that the first user likes listening to music or watching movies; search and browsing history information, such as search keywords or browsing records of the first user in a search engine, a website, or an application; purchase history and consumption behavior information, for example, purchase records or consumption amount; or device and technical information: device type, operating system, browser version, or the like used by the first user. Optionally, the personalized information of the first user is information authorized by the first user.

For example, the personalized information of the first user may be: The first user is located at location A and likes to eat hot pot.

S304: The first network function generates the first model based on the first response message.

Optionally, the first network function trains the second model based on the personalized information of the first user to obtain the first model.

In an embodiment, the first network function may further train the second model based on the current and/or the historical original question and the personalized information of the first user to obtain the first model of the first user.

Optionally, the first model may correspond to the first model identifier.

Optionally, after determining the first model of the first user, the first network function may generate the mapping relationship between the first model identifier and the first user identifier.

After the first model is generated using the method shown in FIG. 5, when the first network function receives the first message from the terminal device, the process in which the first network function determines, based on the first message, the first model corresponding to the first user may further be step S204 to step S206 in FIG. 4.

S204: The first network function sends a sixth message to the unified data management function. Correspondingly, the unified data management function receives the sixth message from the first network function.

Optionally, after receiving the first message from the terminal device, the first network function may send the sixth message to the unified data management function, where the sixth message includes a terminal identifier of the terminal device that sends the first message, and the sixth message is for querying for the first user identifier corresponding to the first message.

S205: The unified data management function sends a seventh message to the first network function. Correspondingly, the first network function receives the seventh message from the unified data management function.

Optionally, the unified data management function may determine, based on the terminal identifier carried in the sixth message, the first user identifier corresponding to the first message.

Optionally, the seventh message indicates the first user identifier corresponding to the first message.

S206: The first network function determines, based on the seventh message, the first model corresponding to the first message.

Optionally, the first network function may determine the first model identifier based on the first user identifier and the mapping relationship between the first model identifier and the first user identifier, thereby determining the first model corresponding to the first user.

In this way, a personalized model is used for a specific user, and the model better conforms to a use habit of the user, thereby obtaining a more accurate reply result.

In another embodiment, after the first user subscribes to the model service with the mobile network, and the mobile network generates the personalized first model of the first user, the first network function may further send the first model identifier to the unified data management function, and the unified data management function generates a mapping relationship between the first model identifier and the first user identifier. When the first user sends the first message to the first network function via the terminal device, the first network function may determine the first model identifier based on the first message and the mapping relationship between the first model identifier and the first user identifier in the unified data management function, so that the first network function may determine the first model corresponding to the first message of the first user.

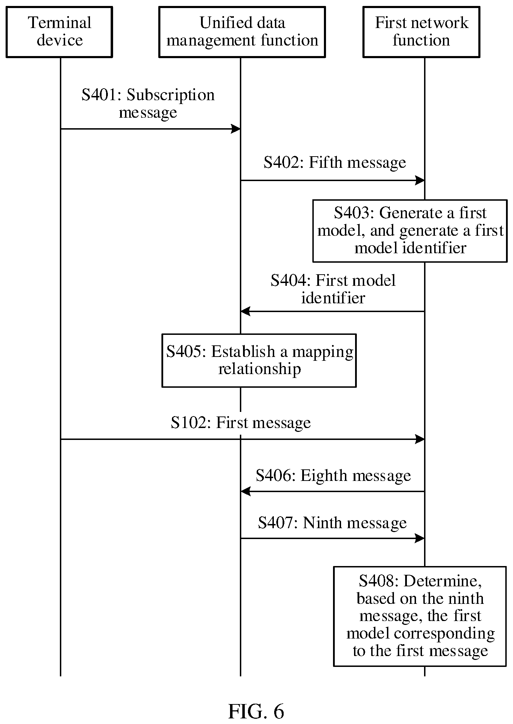

Optionally, a process in which the first network function generates the first model corresponding to the first user may alternatively be specifically step S401 to step S408 shown in FIG. 6.

Optionally, for step S401 and step S402, refer to content in step S201 and step S202. Details are not described herein.

S403: The first network function generates the first model, and generates the first model identifier.

Optionally, for a specific process in which the first network function generates the first model of the first user, refer to content in step S203.

Optionally, the first network function may further generate the first model identifier corresponding to the first model.

After generating the first model of the first user, the first network function no longer generates the mapping relationship between the first model identifier and the first user identifier.

S404: The first network function sends the first model identifier to the unified data management function. Correspondingly, the unified data management function receives the first model identifier from the first network function.

S405: The unified data management function establishes the mapping relationship.

Optionally, the unified data management function generates the mapping relationship between the first model identifier and the first user identifier.

Optionally, after the first network function receives the first message from the terminal device, a process in which the first network function determines, based on the first message, the first model corresponding to the first user may further be step S406 to step S408.

S406: The first network function sends an eighth message to the unified data management function. Correspondingly, the unified data management function receives the eighth message from the first network function.

Optionally, after receiving the first message, the first network function may send the eighth message to the unified data management function, where the eighth message includes the terminal identifier of the terminal device that sends the first message, and the eighth message is for querying for the first model identifier corresponding to the first message.

S407: The unified data management function sends a ninth message to the first network function. Correspondingly, the first network function receives the ninth message from the unified data management function.

Optionally, the unified data management function may determine, based on the eighth message, the first user identifier corresponding to the first message, and then determine the first model identifier based on the first user identifier and the mapping relationship between the first model identifier and the first user identifier.

Optionally, the ninth message indicates the first model identifier corresponding to the first message.

S408: The first network function determines, based on the ninth message, the first model corresponding to the first message.

Optionally, the first network function may determine, based on the first model identifier, the first model corresponding to the first message.

S103: The first network function determines the second message based on the first message by using the first model. The second message indicates a personalized question corresponding to the first message.

Optionally, the first network function may determine the second message based on the first message by using the first model corresponding to the first user. The second message is a personalized question of the first user determined by the first model based on the original question (the first message) of the first user.

For example, when the first message is "Any recommendations for lunch?", and personalized information of the first user is: When the first user is located in place A and likes to eat hot pot, the personalized information of the first user may be added to the second message. For example, the second message is "Recommend lunch within 3 km away from place A, and recommend several more hot pot restaurants".

S104: The first network function sends the second message to the terminal device. Correspondingly, the terminal device receives the second message from the first network function.

Optionally, the first network function may send the second message to the terminal device via an access network device, and display the second message on an interface of the terminal device, so that the first user views the second message.

For example, the BLF may send the second message to the terminal device via the access network device.

S105: The terminal device determines a third message based on the second message. The third message is for obtaining a personalized reply result.

In an embodiment, the first user may not change the second message, and the third message is the same as the second message.

In another embodiment, the first user may change the second message to obtain the third message.

Optionally, when viewing content of the second message and considering that the second message is inappropriate, the first user may change the content of the second message.

For example, when the first user wants to eat barbecue, the second message may be changed to "Recommend lunch within 3 km away from place A, and recommend several more barbecue restaurants".

For another example, when the first user wants to have a meal nearby, the second message may be changed to "Recommend lunch within 1 km away from place A, and recommend several more hot pot restaurants".

S106: The terminal device sends the third message to a second network function. Correspondingly, the second network function receives the third message from the terminal device.

Optionally, the second network function is for deploying an artificial intelligence (artificial intelligence, AI) inference model, and the second network function may obtain an inference result through inference based on the third message.

Optionally, the second network function may be deployed in a core network of the foregoing communication system, or may be deployed outside the core network of the communication system, for example, deployed in the internet.

S107: The second network function determines a fourth message based on the third message. The fourth message indicates the personalized reply result.

For example, when the third message is "Recommend lunch within 3 km away from place A, and recommend several more hot pot restaurants", the fourth message may be "Lunch recommendation: hot pot A at a distance of 1 km, hot pot B at a distance of 2 km, barbecue C at a distance of 1 km, or grilled fish D at a distance of 3 km".

For another example, when the third message is "Recommend lunch within 3 km away from place A, and recommend several more barbecue restaurants", the fourth message may be "Lunch recommendation: barbecue C at a distance of 1 km, barbecue E at a distance of 2 km, hot pot A at a distance of 1 km, or grilled fish D at a distance of 3 km".

For another example, when the third message is "Recommend lunch within 2 km away from place A, and recommend several more hot pot restaurants", the fourth message may be "Lunch recommendation: hot pot A at a distance of 1 km, hot pot B at a distance of 2 km, or barbecue C at a distance of 1 km".

S108: The second network function sends the fourth message to the terminal device. Correspondingly, the terminal device receives the fourth message from the second network function.

In this way, the second network function does not perform storage and processing of the personalized information of the user and does not store or leak private information of the user, and the user can still obtain the personalized reply result.

In another embodiment, when the second network function is a network function of a third party, and the second network function is deployed in a trusted domain, the terminal device sends the first message to the second network function, and then the second network function sends the first message to the first network function and invokes the first network function to obtain the second message. After obtaining the second message, the first network function sends the second message to the second network function. The second network function performs inference on the second message to obtain a reply result, and returns the reply result to the terminal device, so that the user views the reply result corresponding to the first message. That the second network function is deployed in the trusted domain indicates that there is a trust relationship between the second network function and the first network function. For example, a private network (for example, a dedicated network, an enterprise internal network, or a closed network) is opened for a park. In this case, a second network function in the park is a network function deployed in the trusted domain, and may directly interact with the first network function.

The third party is a second network function deployed by an entity other than an operator, for example, may be a function that is of an external application and that is deployed by the external application in a core network or an area outside the core network.

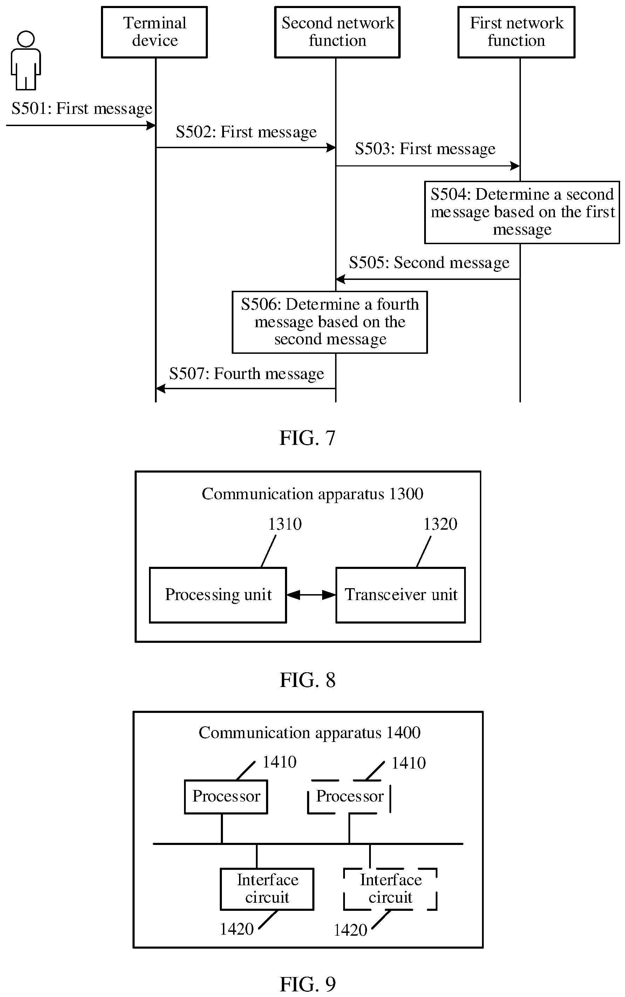

FIG. 7 is a flowchart of another data method according to an embodiment of this application. The method includes step S501 to step S507.

S501: A terminal device obtains a first message. The first message is for obtaining a personalized question.

Optionally, a first user may input an original question, that is, the first message, on the terminal device. For example, the first message may be "Any recommendations for lunch?"

Optionally, the first message may alternatively be another question input by the first user. This is not specifically limited in this embodiment of this application.

Optionally, the terminal device stores a plurality of original questions. The terminal device selects one of the original questions, and determines the selected original question as the first message.

S502: The terminal device sends the first message to a second network function. Correspondingly, the second network function receives the first message from the terminal device.

Optionally, a first network function is for obtaining the personalized question based on a first model.

Specifically, the first network function is for generating the first model, and the first model is used for providing a personalized service.

Optionally, the first network function is further for generating the first model identifier corresponding to the first model.

Optionally, the terminal device may send the first message to the first network function via an access network device.

Optionally, the second network function does not process the first message, but invokes the first network function to process the first message to obtain a personalized second message. The second network function does not obtain private information of the first user, thereby ensuring information security.

S503: The second network function sends the first message to the first network function. Correspondingly, the first network function receives the first message from the second network function.

Optionally, for a specific process of this step, refer to content in step S102. Details are not described herein again.

S504: The first network function determines the second message based on the first message.

Optionally, for a specific process in which the first network function determines the second message based on the first message, refer to content in step S103. Details are not described herein again.

S505: The first network function sends the second message to the second network function. Correspondingly, the second network function receives the second message from the first network function.

Optionally, the first network function may send the second message to the terminal device via an access network device.

S506: The second network function determines a fourth message based on the second message.

Optionally, for a specific process in which the second network function determines the fourth message based on the second message, refer to content in step S107. Details are not described herein again.

S507: The second network function sends the fourth message to the terminal device. Correspondingly, the terminal device receives the fourth message from the second network function. The fourth message indicates a personalized reply result.

Optionally, the first network function may send the second message to the terminal device, and display the second message on an interface of the terminal device, so that the first user views the fourth message.

In another embodiment, when the second network function is a network function of a third party, and the second network function is not deployed in a trusted domain, the second network function may directly interact with the first network function by using a network exposure function (network exposure function, NEF).

Specifically, after the terminal device sends the first message to the second network function, the second network function sends the first message to the NEF, and the NEF sends the first message to the first network function. After obtaining the second message, the first network function sends the second message to the NEF, and then the NEF sends the second message to the second network function. In this way, information transmission security can be ensured.

In an embodiment, after the terminal device receives the second message from the first network function, the user may further send a feedback message to the first network function. The feedback message may include user evaluation information.

Optionally, the user evaluation information may be "Is content of the second message satisfactory or not?"

For example, the user evaluation information is "Yes", and in this case, the first model is not updated. The user evaluation information is "No", and in this case, the first network function may update the first model.

Optionally, the user evaluation information may be an overall evaluation on the first model.

For example, the user evaluation information may be "Recommended content is too monotonous", the user evaluation information may be "Recommended content is too broad", or the user evaluation information may be "Recommended content is expected to be more detailed".

Optionally, the first network function may update the first model based on a single feedback message, or may cache a plurality of feedback messages and update the first model based on the plurality of feedback messages.

Optionally, the first network function may update the first model by using a reinforcement learning from human feedback (reinforcement learning from human feedback, RLHF) mechanism. The first network function may update the first model by using another method. This is not specifically limited in this embodiment of this application.

In this way, the first model is updated and refined by using the user evaluation information, thereby improving inference accuracy and a personalization degree of the first model.

It should be noted that, the foregoing plurality of embodiments may be combined, and a combined solution is implemented. Optionally, some operations in procedures of the foregoing method embodiments are randomly combined, and/or a sequence of some operations is randomly changed. In addition, an execution sequence between steps of each procedure is merely an example, and does not constitute a limitation on the execution sequence between the steps. The steps may alternatively be performed in another sequence. This is not intended to indicate that the execution sequence is the only sequence in which the operations can be performed. A person of ordinary skill in the art is to figure out a plurality of manners to reorder the operations in this specification. In addition, it should be noted that process details related to a specific embodiment in this specification are also applicable to another embodiment in a similar manner, or different embodiments may be used in combination.

It may be understood that, to implement functions in the foregoing embodiments, the channel feature map management apparatus, the access network device, and the terminal include corresponding hardware structures and/or software modules for performing the functions. A person skilled in the art should be easily aware that, in this application, units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

FIG. 8 and FIG. 9 are diagrams of structures of possible communication apparatuses according to embodiments of this application. The communication apparatuses may be configured to implement a function of the channel feature map management apparatus, the terminal, or the access network device in the foregoing method embodiments, and therefore can also implement beneficial effects of the foregoing method embodiments. In embodiments of this application, the communication apparatus may be a channel feature map management apparatus, a terminal, or an access network device, or may be a module (for example, a chip) used in the channel feature map management apparatus, the terminal, or the access network device.

As shown in FIG. 8, a communication apparatus 1300 includes a processing unit 1310 and a transceiver unit 1320. The communication apparatus 1300 is configured to implement a function of the first network function, the second network function, or the terminal device in the method embodiments shown in FIG. 3 and FIG. 7.

When the communication apparatus 1300 is configured to implement the function of the first network function in the method embodiments shown in FIG. 3, the transceiver unit 1320 is configured to receive a first message from the terminal device; and the transceiver unit 1320 is further configured to send a second message to the terminal device.

The processing unit 1310 is configured to perform a processing-related function. For example, the processing unit 1310 may be configured to perform all operations other than receiving and sending operations performed by the communication apparatus in the embodiments shown in FIG. 3, and/or configured to support another process of the technology described in this specification. For example, the second message is obtained based on the first message.

When the communication apparatus 1300 is configured to implement the function of the second network function in the method embodiments shown in FIG. 3, the transceiver unit 1320 is configured to receive a third message from the terminal device; and the transceiver unit 1320 is further configured to send a fourth message to the terminal device. The processing unit 1310 is configured to perform a processing-related function. For example, the processing unit 1310 may be configured to perform all operations other than receiving and sending operations performed by the communication apparatus in the embodiments shown in FIG. 3, and/or configured to support another process of the technology described in this specification. For example, the fourth message is obtained based on the third message.

When the communication apparatus 1300 is configured to implement the function of the terminal device in the method embodiments shown in FIG. 3, the transceiver unit 1320 is configured to receive the second message from the first network function; the transceiver unit 1320 is further configured to send the third message to the first network function; the transceiver unit 1320 is further configured to receive the fourth message from the second network function; and the processing unit 1310 is configured to perform a processing-related function. For example, the processing unit 1310 may be configured to perform all operations other than receiving and sending operations performed by the communication apparatus in the embodiments shown in FIG. 3, and/or configured to support another process of the technology described in this specification. For example, the third message is obtained based on the second message.

When the communication apparatus 1300 is configured to implement the function of the first network function in the method embodiments shown in FIG. 7, the transceiver unit 1320 is configured to receive a first message from the second network function; the transceiver unit 1320 is further configured to send a second message to the second network function; and the processing unit 1310 is configured to perform a processing-related function. For example, the processing unit 1310 may be configured to perform all operations other than receiving and sending operations performed by the communication apparatus in the embodiments shown in FIG. 7, and/or configured to support another process of the technology described in this specification. For example, the second message is determined based on the first message.

When the communication apparatus 1300 is configured to implement the function of the second network function in the method embodiments shown in FIG. 7, the transceiver unit 1320 is configured to receive the first message from the terminal device; the transceiver unit 1320 is further configured to send the first message to the first network function; the transceiver unit 1320 is further configured to receive the second message from the first network function; and the transceiver unit 1320 is further configured to send a fourth message to the terminal device. The processing unit 1310 is configured to perform a processing-related function. For example, the processing unit 1310 may be configured to perform all operations other than receiving and sending operations performed by the communication apparatus in the embodiments shown in FIG. 7, and/or configured to support another process of the technology described in this specification. For example, the fourth message is determined based on the second message.

When the communication apparatus 1300 is configured to implement the function of the terminal device in the method embodiments shown in FIG. 7, the transceiver unit 1320 is configured to send the first message to the second network function; the transceiver unit 1320 is further configured to receive the fourth message from the second network function; and the processing unit 1310 is configured to perform a processing-related function. For example, the processing unit 1310 may be configured to perform all operations other than receiving and sending operations performed by the communication apparatus in the embodiments shown in FIG. 7, and/or configured to support another process of the technology described in this specification.

For more detailed descriptions of the processing unit 1310 and the transceiver unit 1320, refer to related descriptions in the method embodiments shown in FIG. 3 and FIG. 7. The processing unit 1310 and the transceiver unit 1320 may further perform other steps. For a specific implementation, refer to the method embodiments. Details are not described herein.

Optionally, the transceiver unit 1320 may be a transceiver. The transceiver may include an antenna, a radio frequency circuit, and the like.

The processing unit 1310 may be a processor (or a processing circuit), for example, a baseband processor. The baseband processor may include one or more CPUs.

As shown in FIG. 9, a communication apparatus 1400 includes a processor 1410 and an interface circuit 1420. The processor 1410 and the interface circuit 1420 are coupled to each other. It may be understood that, the interface circuit 1420 may be a transceiver or an input/output interface. Optionally, the communication apparatus 1400 may further include a memory 1430 configured to: store instructions to be executed by the processor 1410, store input data required by the processor 1410 to run the instructions, or store data generated after the processor 1410 runs the instructions.

When the communication apparatus 1400 is configured to implement the method shown in FIG. 5 or FIG. 9, the processor 1410 is configured to implement a function of the foregoing processing unit 1310, and the interface circuit 1420 is configured to implement a function of the foregoing transceiver unit 1320.

When the communication apparatus is a chip used in a channel feature map management apparatus, the chip in the channel feature map management apparatus implements a function of the channel feature map management apparatus in the foregoing method embodiments. That the chip in the channel feature map management apparatus receives information from an access network device may be understood as that the information is first received by another module (for example, a radio frequency module or an antenna) in the channel feature map management apparatus, and then sent by the module to the chip in the channel feature map management apparatus. That the chip in the channel feature map management apparatus sends information to an access network device may be understood as that the information is first sent to another module (for example, a radio frequency module or an antenna) in the channel feature map management apparatus, and then sent by the module to the access network device and/or a terminal.

When the communication apparatus is a chip used in a terminal, the chip in the terminal implements a function of the terminal in the foregoing method embodiments. That the chip in the terminal receives information from an access network device may be understood as that the information is first received by another module (for example, a radio frequency module or an antenna) in the terminal, and then sent by the module to the chip in the terminal. That the chip in the terminal sends information to an access network device may be understood as that the information is first sent to another module (for example, a radio frequency module or an antenna) in the terminal, and then sent by the module to the access network device.

When the communication apparatus is a chip used in an access network device, the chip in the access network device implements a function of the access network device in the foregoing method embodiments. That the chip in the access network device receives information from a terminal and/or a channel feature map management apparatus may be understood as that the information is first received by another module (for example, a radio frequency module or an antenna) in the access network device, and then sent by the module to the chip in the access network device. That the chip in the access network device sends information to a terminal and/or a channel feature map management apparatus may be understood as that the information is first sent to another module (for example, a radio frequency module or an antenna) in the access network device, and then sent by the module to the terminal and/or the channel feature map management apparatus.

The communication device shown in FIG. 8 or FIG. 9 is merely an example. In an actual application, the communication device may have more or fewer components than those shown in FIG. 8 or FIG. 9, may combine two or more components, or may have different component configurations.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives, via another entity, the information sent by the entity A. The entity A and the entity B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, information exchange between a chip in an access network and another module in the access network, or information exchange between a chip in a channel feature map management apparatus and another module in the channel feature map management apparatus.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium, and write information into the storage medium. The storage medium may alternatively be a component of the processor. The processor and the storage medium may be located in an ASIC. In addition, the ASIC may be located in a base station or a terminal. Alternatively, the processor and the storage medium may exist in the base station or the terminal as discrete components.

All or some of the foregoing embodiments may be implemented by using software, hardware, firmware, or any combination thereof. When software is used for implementing the embodiments, all or some of the embodiments may be implemented in a form of a computer program product. The computer program product includes one or more computer programs or instructions. When the computer program or the instructions are loaded and executed on a computer, all or some procedures or functions according to embodiments of this application are executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, a computer, a server, or a data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or if there is a logic conflict, terms and/or descriptions in different embodiments are consistent and may be mutually referenced, and technical features in different embodiments may be combined into a new embodiment based on an internal logical relationship thereof.

## Claims

1. A data processing method, applied to a first network function, wherein the first network function is for obtaining a personalized question based on a first model, and the method comprises:
receiving a first message, wherein the first message comprises an original question; and
sending a second message, wherein the second message is determined based on the first model and the first message, the first model is obtained through training based on a current and/or a historical original question and personalized information of a first user, the second message indicates a personalized question corresponding to the first message, the second message is used by a second network function to obtain a reply result, and the second network function is for inferring the second message based on an artificial intelligence AI inference model.

2. The method according to claim 1, wherein the first network function is located in a core network of a mobile network.

3. The method according to claim 1 or 2, wherein the sending the second message comprises:
sending the second message to the second network function, or sending the second message to a terminal device.

4. The method according to any one of claims 1 to 3, wherein before receiving the first message, the method further comprises:
receiving a fifth message, wherein the fifth message comprises a first user identifier, and the fifth message is for requesting to establish the first model; and
establishing the first model based on the fifth message.

5. The method according to claim 4, wherein the establishing the first model based on the fifth message comprises:
sending a first request message, wherein the first request message is for requesting the personalized information of the first user;
receiving a first response message, wherein the first response message comprises the personalized information of the first user, and determining the first model based on the first response message, the historical original question of the first user, and a second model, wherein the second model is determined based on general information; and
generating a first model identifier of the first model, wherein the first model corresponds to the first model identifier.

6. The method according to claim 5, further comprising:
generating a mapping relationship between the first model identifier and the first user identifier.

7. The method according to claim 6, wherein after receiving the first message, the method further comprises:
sending a sixth message to a unified data management function, wherein the sixth message is for querying for the first user identifier corresponding to the first message;
receiving a seventh message from the unified data management function, wherein the seventh message comprises the first user identifier corresponding to the first message; and
determining the first model identifier based on the first user identifier and the mapping relationship between the first model identifier and the first user identifier.

8. The method according to claim 5, further comprising: sending the first model identifier to a unified data management function.

9. The method according to claim 8, wherein after receiving the first message, the method further comprises:
sending an eighth message to the unified data management function, wherein the eighth message is for querying for the first model identifier corresponding to the first message; and
receiving a ninth message from the unified data management function, wherein the ninth message comprises the first model identifier corresponding to the first message.

10. The method according to any one of claims 1 to 9, wherein after sending the second message, the method further comprises:
receiving a feedback message from the terminal device, wherein the feedback message comprises user evaluation information; and
updating the first model based on the feedback message.

11. A data processing method, applied to a terminal device, wherein the method comprises:
sending a first message, wherein the first message comprises an original question;
receiving a second message, wherein the second message is determined based on a first model and the first message, the first model is obtained through training based on a current and/or a historical original question and personalized information of a first user, the second message indicates a personalized question corresponding to the first message, the second message is used by a second network function to obtain a reply result, and the second network function is for inferring the second message based on an artificial intelligence AI inference model;
sending a third message to the second network function, wherein the third message is obtained based on the second message; and
receiving a fourth message from the second network function, wherein the fourth message comprises a reply result of the third message.

12. The method according to claim 11, wherein the sending the first message comprises:
sending the first message to the second network function, or sending the first message to a first network function.

13. The method according to claim 11 or 12, wherein before sending the first message, the method further comprises:
sending a service subscription message to a unified data management function, wherein the service subscription message indicates the first network function to establish the first model.

14. The method according to any one of claims 11 to 13, further comprising:
receiving a first request message, wherein the first request message is for requesting the personalized information of the first user; and
sending a first response message, wherein the first response message comprises the personalized information of the first user.

15. The method according to any one of claims 11 to 14, further comprising:
sending a feedback message to the first network function, wherein the feedback message comprises user evaluation information.

16. A data processing method, applied to a unified data management function and comprising:
receiving a service subscription message from a terminal device, wherein the service subscription message indicates a first network function to establish a first model; and
sending a fifth message to the first network function, wherein the fifth message comprises a first user identifier, and the fifth message is for requesting to establish the first model.

17. The method according to claim 16, further comprising:
receiving a first model identifier from the first network function; and
generating a mapping relationship between the first model identifier and the first user identifier.

18. The method according to claim 17, further comprising:
receiving an eighth message from the first network function, wherein the eighth message is for querying for the first model identifier corresponding to the first message; and
sending a ninth message, wherein the ninth message comprises the first model identifier corresponding to the first message.

19. A data processing apparatus, used in a first network function, wherein the first network function is for obtaining a personalized question based on a first model, and the processing apparatus comprises:
a transceiver unit, configured to receive a first message, wherein the first message comprises an original question; and
a processing unit, configured to determine a second message based on the first model and the first message, wherein the first model is obtained through training based on a current and/or a historical original question and personalized information of a first user, the second message indicates a personalized question corresponding to the first message, the second message is used by a second network function to obtain a reply result based on the second message, and the second network function is for inferring the second message based on an artificial intelligence AI inference model, wherein
the transceiver unit is further configured to receive the second message.

20. The data processing apparatus according to claim 19, wherein the first network function is located in a core network of a mobile network.

21. The data processing apparatus according to claim 19 or 20, wherein
the transceiver unit is further configured to: send the second message to the second network function, or send the second message to a terminal device.

22. The data processing apparatus according to any one of claims 19 to 21, wherein
the transceiver unit is further configured to receive a fifth message, wherein the fifth message comprises a first user identifier, and the fifth message is for requesting to establish the first model; and
the processing unit is further configured to establish the first model based on the fifth message.

23. The data processing apparatus according to claim 22, wherein
the transceiver unit is further configured to: send a first request message, wherein the first request message is for requesting the personalized information of the first user; and receive a first response message, wherein the first response message comprises the personalized information of the first user;
the processing unit is further configured to determine the first model based on the first response message, the historical original question of the first user, and a second model, wherein the second model is determined based on general information; and
the processing unit is further configured to generate a first model identifier of the first model, wherein the first model corresponds to the first model identifier.

24. The data processing apparatus according to claim 23, wherein
the processing unit is further configured to generate a mapping relationship between the first model identifier and the first user identifier.

25. The data processing apparatus according to claim 24, wherein
the transceiver unit is further configured to send a sixth message to a unified data management function, wherein the sixth message is for querying for the first user identifier corresponding to the first message;
the transceiver unit is further configured to receive a seventh message from the unified data management function, wherein the seventh message comprises the first user identifier corresponding to the first message; and
the processing unit is further configured to determine the first model identifier based on the first user identifier and the mapping relationship between the first model identifier and the first user identifier.

26. The data processing apparatus according to claim 23, wherein
the transceiver unit is further configured to send the first model identifier to a unified data management function.

27. The data processing apparatus according to claim 26, wherein
the transceiver unit is further configured to send an eighth message to the unified data management function, wherein the eighth message is for querying for the first model identifier corresponding to the first message; and
the transceiver unit is further configured to receive a ninth message from the unified data management function, wherein the ninth message comprises the first model identifier corresponding to the first message.

28. The data processing apparatus according to any one of claims 19 to 27, wherein
the transceiver unit is further configured to receive a feedback message from the terminal device, wherein the feedback message comprises user evaluation information; and
the processing unit is further configured to update the first model based on the feedback message.

29. A data processing apparatus, used in a terminal device, wherein the data processing apparatus comprises:
a processing unit, configured to determine a first message, wherein the first message comprises an original question; and
a transceiver unit, configured to send the first message, wherein
the transceiver unit is further configured to receive a second message, wherein the second message is determined based on a first model and the first message, the first model is obtained through training based on a current and/or a historical original question and personalized information of a first user, the second message indicates a personalized question corresponding to the first message, the second message is used by a second network function to obtain a reply result based on the second message, and the second network function is for inferring the second message based on an artificial intelligence AI inference model;
the processing unit is further configured to determine a third message, wherein the third message is obtained based on the second message;
the transceiver unit is further configured to send the third message to the second network function; and
the transceiver unit is further configured to receive a fourth message from the second network function, wherein the fourth message comprises a reply result of the third message.

30. The data processing apparatus according to claim 29, wherein
the transceiver unit is further configured to: send the first message to the second network function, or send the first message to a first network function.

31. The data processing apparatus according to claim 29 or 30, wherein
the transceiver unit is further configured to send a service subscription message to a unified data management function, wherein the service subscription message indicates the first network function to establish the first model.

32. The data processing apparatus according to any one of claims 29 to 31, wherein
the transceiver unit is further configured to receive a first request message, wherein the first request message is for requesting the personalized information of the first user; and
the transceiver unit is further configured to send a first response message, wherein the first response message comprises the personalized information of the first user.

33. The data processing apparatus according to any one of claims 29 to 32, wherein
the transceiver unit is further configured to send a feedback message to the first network function, wherein the feedback message comprises user evaluation information.

34. A data processing apparatus, used in a unified data management function and comprising:
a transceiver unit, configured to receive a service subscription message from a terminal device, wherein the service subscription message indicates a first network function to establish a first model; and
a processing unit, configured to determine a fifth message, wherein the fifth message comprises a first user identifier, and the fifth message is for requesting to establish the first model, wherein
the transceiver unit is further configured to send the fifth message to the first network function.

35. The data processing apparatus according to claim 34, wherein
the transceiver unit is further configured to receive the first model identifier from the first network function; and
the processing unit is further configured to generate a mapping relationship between the first model identifier and the first user identifier.

36. The data processing apparatus according to claim 35, wherein
the transceiver unit is further configured to receive an eighth message from the first network function, wherein the eighth message is for querying for the first model identifier corresponding to the first message; and
the transceiver unit is further configured to send a ninth message, wherein the ninth message comprises the first model identifier corresponding to the first message.

37. A communication apparatus, comprising a processor, wherein the processor is configured to implement, by using a logic circuit or by executing code instructions, the method according to any one of claims 1 to 10, the method according to any one of claims 11 to 15, or the method according to any one of claims 16 to 18.

38. A computer-readable storage medium, wherein the storage medium stores a computer program or instructions; and when the computer program or the instructions are executed by a communication apparatus, the method according to any one of claims 1 to 10 is implemented, the method according to any one of claims 11 to 15 is implemented, or the method according to any one of claims 16 to 18 is implemented.

39. A computer program product, comprising a computer program or instructions, wherein when the computer program or the instructions are executed by a computer, the computer is enabled to implement the method according to any one of claims 1 to 18.

40. The method according to any one of claims 1 to 18, the apparatus according to any one of claims 19 to 37, the computer-readable storage medium according to claim 38, or the computer program product according to claim 39, wherein the first network function comprises a personalized bridging logic function.
